# EUROPEAN PATENT APPLICATION

(11) **EP 1 634 495 A1**
(43) Date of publication of application: **15.03.2006**
(21) Application number: 05019198.0
(22) Date of filing: 05.09.2005
(51) Int. Cl.: A01L 7/02, A01L 1/04

(54) **Cushioned horseshoe**

(30) Priority: 10.09.2004 IT MI20040421
(71) Applicant: Vittoni, Gianni, 28885 Pié di Mulera (Verbania) (IT)
(72) Inventor: Vittoni, Gianni, 28885 Pié di Mulera (Verbania) (IT)
(74) Representative: Ferraiolo, Rossana

(57) **Abstract**

Two horseshoe shaped metal elements (2, 3) are spaced one from the other in order to comprise a layer of elastic material (4) extended and fixed all along the whole opposite surfaces of said elements in order to form a sort of integral piece, both the metal elements being provided with corresponding through holes (5) for the nailing on the horseshoe under to horse hoof

## Description

The present invention refers to a cushioned horseshoe, in particular to a horseshoe provided with means for cushioning the impact of a horse hoof with the ground.

Several types of cushioned horseshoes are known. According to a first known embodiment, the cushioning is got by interposing between the horseshoe and the nail (hereinafter referred to as hoof) a layer of elastic material as, for instance, rubber, plastic or leather; according to a second known embodiment, the cushioning is got by completely covering the horseshoe with a sheet of elastic material as, for instance, rubber.

A third type of known cushioned horseshoe comprises a first element in the shape of a horseshoe adapted to be applied to the hoof and a second element, also in the shape of a horseshoe, which is associated to said first element spaced enough for containing therebetween three cylinders of elastic material, two of them being adjacent to the ends of said elements and one being at the centre thereof. Said elements are associated one with the other by suitable fixing means as, for instance, screws such that the second element is allowed to slide along them. The horseshoe is assembled when it is applied to the hoof. The first element is nailed on under the hoof by conventional farrier's nails and, then, the second element is screwed to the first one after interposing said elastic cylinders.

The main drawbacks of the known horseshoes are the following.
- as far as the first embodiment is concerned, the squashing in the elastic material under use causes a certain slack between the horseshoe and the hoof and this forces the nails to be extracted from the hoof. With the purpose of reducing said drawback the thickness of the elastic layer shall be a very thin one, but in this case,the cushioning effect is reduced too.
- in the second embodiment the high friction of the rubber on the ground may cause the horse to fall.
- in the third embodiment the element which gets in contact with the ground may deform in the sections that are free from the elastic cylinders; a second drawback in this embodiment is that, when the first element is applied and adjusted on the hoof, the holes provided for applying the two elements may be found not aligned; this drawback often causes that the horseshoe cannot be adjusted on the hoof and entails long time for applying the horseshoe to the hoof; finally, a drawback is the high cost of the horseshoe.

The cushioned horseshoe according to the present invention abviates said drawbacks and comprises two metal elements, both having the shape of a horseshoe, between them elastic means being inserted and, as characterized in the claims, said elastic means is a layer of elastic material extended and fixed along the whole opposite surfaces of said metal elements so as to form with the latter a sort of integral piece, both elements being provided with corresponding through holes for nailing on the horseshoe under the hoof and each hole in the element that gets in contact with the ground having such dimensions as to let the head of the nails pass through completely, whereas each hole in the element that gets in contact with the hoof having such dimensions as to let the nail body to pass, but not the nail head so as to let the nail head pass through the element that is in contact with the ground and through the elastic layer along a suitable through hole in the latter and to stop against the element that is in contact with the hoof so preventing the nails from being exposed to possible tearing when the element that is in contact with the ground is pushed towards the other element on the moments the elastic layer effects its cushioning work.

Said elastic layer may be of rubber or alternatively of elastomer sheets, of any suitable elastic material or of a honey-comb layer in aluminium or carbon.

Said metal elements are made integral by the sizing of the respective opposite surfaces with the surfaces of the elastic layer, the sizing being obtained by specific bicomponent sizes for rubber, plastic and metal to metal sizing. Alternatively, in case of a rubber layer, said elements would be made integral by a vulcanization precess.

Additionally, the metal elements may connected together by screws or rivets provided the element that gets in contact with the ground may slide along the screws or rivets in the direction of the opposite element.

The present invention refers to cushioned horseshoes of any shape as, for instance, of the closed type.

The advantages of the cuschioned horseshoe according to the present invention come from that the layer of elastic material being extended and fixed along the whole opposite surfaces of the metal elements allows a better cushioning and prevents from the possible deformations of the elemnt that gets in contact with the ground. Other advantages are due to the easy application of the horseshoe to the hoof and possibility of adjusting the horseshoe according to the hoof shape. Finally, a further advantage is the low cost.

The invention will now be described by way of example and with reference to the accompanying drawings in which:
- Fig. 1 is a perspective view and
- Fig. 2 is a first section view.

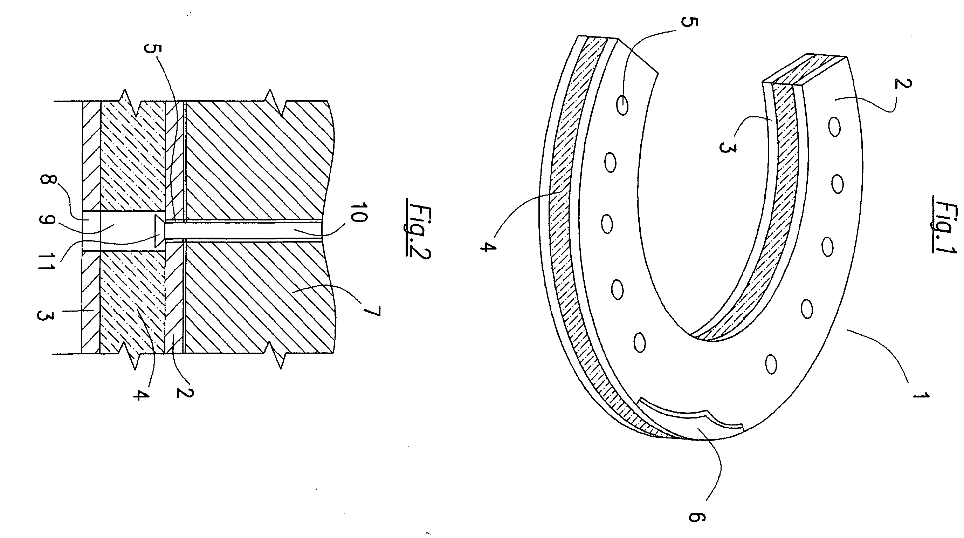

Fig. 1 shows a cushioned horseshoe comprising two steel elements 2, 3, both in the shape of a horseshoe, between them a layer 4 of vulcanized rubber being interposed to extend and be fixed over the whole opposite surfaces of said elements. Element 2 comprises though holes for the nailing on of the horseshoe under the hoof. Element 3, in correspondence of each hole 5 in the element 2, is provided with a through hole, not shown in the figue, the scope of which is explained with reference to Fig. 2. Fig. 1 shows also an element 6 which works as a template and auxiliary clamping of the horseshoe to the hoof. Is is shown as the layer of elastic material has the plan shape of the two metal elements 2,3.

It will be realized that the horseshoe being a single piece it will be adjustable on the hoof like a conventioanl horseshoe when being applied to the hoof.

Fig. 2 is a cross section in correspondence with one of the holes 5 and in particular the figure shows the elements 2, 3 , the layer 4 of vulcanized rubber and a portion 7 of the hoof. The figure also shows, in correspondence of hole 5 in the element 2 , a through hole 8 in the element 3 and a through hole 9 in the layer 4 of vulcanized rubber, both said holes 8, 9 having a diameter larger than the diameter of hole 5 so that a nail 10 passes though the holes 8, 9 and 5 for nailing on the horseshoe under the hoof 7 and the nail head 11 passes through the holes 8, 9 and stops against the element 2 since said head can not pass through the hole 5.

Said elements 2, 3 may be alternatively of aluminium, titanium, corbon or other suitable metal or metal alloy.

Elements 2, 3 may be fixed in their reciprocal position by screws or rivets. In this case, the holes in said element 3 that gets in contact with the ground and the rivet ends, within said holes, are not threaded so that element 3 may slide towards the element 2 for cushioning impacts.

## Claims

1. Cushioned horseshoe (1) comprising two metal elements (2, 3) in the shape of a horseshoe where elastic means are inserted between **characterized in that** said elastic means is a layer of elastic material (4) extended and fixed all along the whole opposite surfaces of said metal elements to form an integral piece with said elements, both the metal elements being provided with corresponding through holes (5, 8) for the nailing on the horseshoe under the horse hoof and each hole (8) in the element (3) that gets in contact with the ground having a diameter higher than the diameter of the corresponding hole (5) in the element (2) that getting in contact with the horse hoof.

2. Cushioned horseshoe (1) according to claim 1 **characterized in that** said layer of elastic material (4) is of vulcanized rubber or elastomer.

3. Cushioned horseshoe (1) according to claim 1 **characterized in that** said layer of elastic material (4) is a honey-comb layer in aluminium or carbon.

4. Cushioned horseshoe (1) according to claim 1 **characterized in that** said layer of elastic material (4) is sized to the opposite surfaces of said metal elements (2, 3).

5. Cushioned horseshoe (1) according to claims 1, 2 **characterized in that** the layer of vulcanized rubber (4) is made integral with said metal elements (2, 3) by means of a vulcanization process.

6. Cushioned horseshoe (1) according to preceeding claims **characterized in that** said metal elements (2, 3) are fixed in their reciprocal position by screws or rivets.
